# EUROPÄISCHE PATENTANMELDUNG

(11) **EP 0 683 447 A2**
(43) Veröffentlichungstag der Anmeldung: **22.11.1995**
(21) Anmeldenummer: 95107496.2
(22) Anmeldetag: 16.05.1995
(51) Int. Cl.: G06F 1/00, H04J 3/04, H04L 7/00

(54) **Synchrone Übernahme von hochbitratigen Datenströmen in einen Baustein mit einer niedrigen internen Datenverarbeitungsrate**

(30) Priorität: 20.05.1994 DE 4417774
(71) Anmelder: SIEMENS AKTIENGESELLSCHAFT, D-80333 München (DE)
(72) Erfinder: Müllner, Ernst, Dipl. Ing., D-80335 München (DE); Döbler, Christian, Dipl. Ing., D-82024 Taufkirchen (DE); Hellwig, Mathias, Dipl. Ing., D-80637 München (DE); Schinagel, Dieter, Dipl. Ing., D-81547 München (DE); Bromm, Christiane, Dipl. Phys., D-81476 München (DE); Stemplinger, Robert, Dipl. Ing., 81377 München (DE); Strunz, Roland Dipl. Ing., 81477 München (DE); Widmann, Eugen Dipl. Ing., 82041 Deisenhofen (DE)

(57) **Zusammenfassung**

Einem Baustein, der eine großflächige integrierte Schaltung aufweist, wird über eine Vielzahl von Dateneingängen hochbitratige Datenströme zugeführt. Die Dateneingänge sind in eine Mehrzahl von jeweils mehrere Dateneingänge umfassende Eingangsgruppen zusammengefaßt. Jeder einem Dateneingang zugeführte hochbitratige Datenstrom ist in mehrere niederbitratige Datenströme umgesetzt. Die Synchronisation der Datenströme mit der die eigentliche Datenverarbeitung durchführenden internen Schaltung erfolgt für jede Eingangsgruppe gesondert im Bereich der niederbitratigen Datenströme.

## Beschreibung

Der Anmeldungsgegenstand betrifft einen Baustein mit einer integrierten Schaltung, die Daten mit einer gegebenen internen Bitfolgerate zu verarbeiten vermag, wobei
- der Baustein eine Vielzahl von Dateneingängen aufweist, denen jeweils ein serieller hochbitratiger Datenstrom mit einer gegenüber der internen Bitfolgerate erhöhten Bitfolgerate zuführbar ist,
- für jeden Dateneingang ein Demultiplexer vorgesehen ist, dessen Teilerverhältnis derart bemessen ist, daß er eine dem Teilerverhältnis entsprechende Mehrzahl von niederbitratigen Datenströmen mit jeweils niedrigerer oder allenfalls gleich hoher Bitfolgerate wie die interne Bitfolgerate abgibt,
- die niederbitratigen Datenströme auf die interne Bitfolgerate synchronisierbar sind.

Weiter betrifft der Anmeldungsgegenstand ein Verfahren zur Durchschaltung von hochbitratigen Datenströmen über einen Baustein mit einer niedrigen internen Datenverarbeitungsrate.

Entwicklungsbemühungen, eine größtmögliche Anzahl von Funktionen in einem einzigen, eine integrierte Schaltung aufweisenden Baustein zu integrieren, führen beispielsweise bei Koppler aufweisenden integrierten Schaltungen zu Bausteinen, die eine relativ große Chipfläche von 13 x 13 mm² aufweisen und denen über eine Vielzahl von Dateneingängen hochbitratige Datenströme zugeführt sind. Die flächenmäßige Ausdehnung der integrierten Schaltung führt bei hohen Datenraten zu Laufzeitunterschieden, die einer synchronen Betriebsweise des Bausteins mit nur einem Taktsignal entgegenwirken.

Diesem Zielkonflikt suchte man bislang durch Auslegung der einzelnen Taktsignale führenden Leitungsbahnen im Chip-Layout auf untereinander gleiche Laufzeiten zu begegnen . Dieser Lösungsansatz stößt jedoch für größere Chipflächen und/oder höhere Bitfolgeraten an Grenzen.

Dem Anmeldungsgegenstand liegt das Problem zugrunde, eine Schaltungsanordnung anzugeben, bei der eine synchrone Übernahme einer Vielzahl von hochbitratigen Datenströmen in einen, eine großflächige integrierte Schaltung aufweisenden Baustein möglich ist, ohne daß auf Grund von Laufzeitunterschieden eine Begrenzung der flächenmäßigen Ausdehnung gegeben wäre.

Das Problem wird dadurch gelöst,
- daß die Dateneingänge zu einer Mehrzahl von jeweils auf ein Taktsignal mit im wesentlichen derselben Phasenlage synchronisierten Eingangsgruppen zusammengefaßt sind, und
- daß die Synchronisierung der niederbitratige Datenströme mit der internen Bitfolgerate für jede Eingangsgruppe gesondert durchführbar ist.

Der Anmeldungsgegenstand bringt bei einer großflächigen integrierten Schaltung, die eine Vielzahl von hochbitratigen Dateneingängen aufweist, den Vorteil einer Loslösung von der auf Grund von Laufzeitunterschieden bedingten Begrenzung der flächenmäßigen Ausdehnung der integrierten Schaltung mit sich. Eine untereinander synchrone Verarbeitung bei der hohen Bitfolgerate sämtlicher den Dateneingängen zugeführten Datenströme ist nicht erforderlich.

In weiterer Ausgestaltung ist einem weiteren Eingang einer Eingangsgruppe ein Taktsignal zugeführt, mit dem die Datenströme dieser Eingangsgruppe synchronisiert sind. Durch diese Maßnahme wird der Aufwand für eine ansonsten vorzusehende Taktrückgewinnungsschaltung eingespart, wodurch sich einerseits eine Verringerung des Flächenbedarfs der integrierten Schaltung und zum anderen eine Verringerung der Verlustleistung ergibt.

In weiterer Ausgestaltung der Erfindung wird einem weiteren Eingang der Eingangsgruppe ein Synchronisationssignal zugeführt, das einen besonderen Zeitpunkt in den der Eingangsgruppe zugeführten Datenströmen angibt. Durch diese Maßnahme wird der Aufwand für eine ansonsten vorzusehende Synchronisationssignal-Rückgewinnungsschaltung eingespart, wodurch sich einerseits eine Verringerung des Flächenbedarfs der integrierten Schaltung und andererseits eine Verringerung der aufzuwendenden Verlustleistung ergibt.

In weiterer Ausgestaltung der Erfindung ist wenigstens einer von den Demultiplexern oder dem weiteren Demultiplexer oder der Teilereinrichtung in unmittelbarer räumlicher Nähe zu den zugehörigen Eingängen der Eingangsgruppe angeordnet. Diese Maßnahme, bei der also die mit der hohen Datenrate beaufschlagten Schaltungsteile in unmittelbarer räumlicher Nähe zu den Eingangsanschlüssen angeordnet sind, bringt eine weitere Entschärfung der Laufzeitproblematik mit sich, indem ein Großteil der Strecke von den Dateneingängen zu der die eigentliche Datenverarbeitung durchführenden internen Schaltung bei der niedrigen Datenfolgerate durchführbar ist.

In weiterer Ausgestaltung der Erfindung ist die Schaltungsanordnung in BICMOS (BIpolar Complementary Metal Oxid Silicium)-Technologie ausgeführt. Diese Maßnahme bringt die Möglichkeit einer monolithischen Integration von mit der hohen Datenfolgerate betriebenen ECL(Emitter Coupled Logic)-Schaltungsteilen und mit der niedrigen Datenfolgerate betriebenen CMOS(Complementary Metal Oxide Silicium)-Schaltungsteilen mit sich.

In weiterer Ausgestaltung der Erfindung erfolgt der Übergang von der ECL-Technologie zu der CMOS-Technologie, sobald als es die zu verarbeitende Datenfolgerate zuläßt. Diese Maßnahme bringt eine Begrenzung der Verlustleistung auf das durch die Technologie bedingte notwendige Maß mit sich.

Ein weiterer Anmeldungsgegenstand betrifft ein Verfahren zur Durchführung von hochbitratigen Datenströmen über einen Baustein, der eine integrierte Schaltung mit einer niedrigen Bitfolgerate aufweist. Bei dieser Vorgehensweise ist in einer eine relativ geringe Ausdehnung aufweisenden integrierten Schaltung eine verlustleistungsarme synchrone Durchschaltung von hochbitratigen Datenströmen gegeben.

Die Erfindung wird im folgenden als Ausführungsbeispiel in zum Verständnis erforderlichem Umfang anhand einer Figur näher beschrieben.

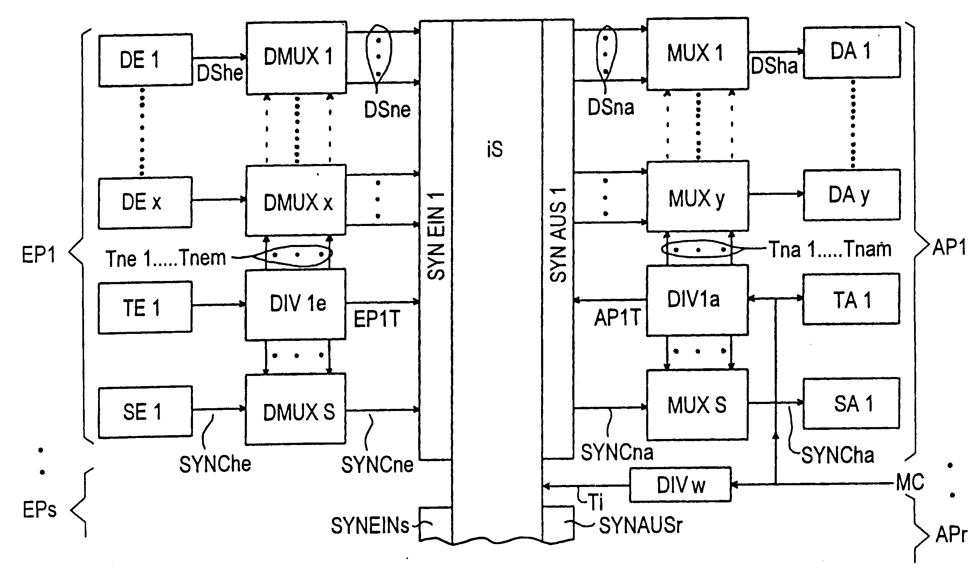

- Fig. 1: zeigt einen eine integrierte Schaltung aufweisenden Baustein, der den Anmeldungsgegenstand verwirklicht.

Dem Baustein wird an Dateneingängen DE jeweils ein eine hohe Bitfolgerate aufweisender serieller Datenstrom DShe zugeführt. Jeder hochbitratige Datenstrom wird einem Demultiplexer DMUX zugeführt und dort in eine Mehrzahl von eine niedrige Datenrate aufweisende Datenströme umgesetzt. Die Mehrzahl der niederbitratigen Datenströme ist derart bemessen, daß die Bitfolgerate jedes einzelnen niederbitratigen Datenstroms niedriger oder allenfalls gleich hoch ist wie die auf der physikalischen Ebene maximal verarbeitbare Bitfolgerate der nachfolgenden internen Schaltung iS. Weist also beispielsweise der hochbitratige Datenstrom eine Bitfolgerate von 800 Mbit/s auf und kann die nachfolgende interne Schaltung Datenströme mit einer maximalen Bitfolgerate von 100 Mbit/s verarbeiten, so beträgt das Teilerverhältnis eines Demultiplexers 1:8.

Beim Anmeldungsgegenstand ist die Gesamtheit der Dateneingänge in eine Mehrzahl von Eingangsgruppen EP1...EPs aufgeteilt; eine Eingangsgruppe umfaßt eine Mehrzahl von Dateneingängen, denen hochbitratige Datenströme mit demselben, im wesentlichen dieselbe Phasenlage aufweisenden Taktsignal zugeführt sind.

Der Schaltungsanordnung nach Fig. 1 wird von außen ein zentrales Taktsignal MC zugeführt. Das zentrale Taktsignal wird in einer Teilereinrichtung DIVw in ein internes Taktsignal Ti umgesetzt, das der internen Schaltung zugeführt wird und dort als Taktsignal dient.

Die Synchronisierung der niederbitratigen Datenströme mit dem internen Taktsignal erfolgt für jede Eingangsgruppe gesondert. Die Synchronisierung wird in eingangsgruppenindividuellen Synchronisiereinrichtungen SYNEIN1..SYNEINs in an sich bekannter Weise bewirkt.

Eine Eingangsgruppe bildet also gewissermaßen eine in sich synchrone Taktinsel.

In der internen Schaltung erfolgt eine Verarbeitung der niederbitratigen Datenströme. Die Verarbeitung kann beispielsweise durch eine Vermittlung der niederbitratigen Datenströme in Richtung zu bestimmten Datenausgängen des Bausteins gegeben sein. In der internen Schaltung können niederbitratige Datenströme einer Eingangsgruppe mit niederbitratigen Datenströmen anderer Eingangsgruppen verarbeitet werden.

Einem eingangsgruppenindividuellen Takteingang TE1 wird das Taktsignal zugeführt, mit dem die der Eingangsgruppe zugeführten hochbitratigen Datenströme synchronisiert sind. Dieses Taktsignal wird einer Teilereinrichtung DIV1e zugeführt, die eine Mehrzahl niederfrequenterer Taktsignale Tne1...Tnem abgibt. Die niederfrequenteren Taktsignale werden den Demultiplexern zugeführt. In den Demultiplexern werden die hochbitratigen Datenströme jeweils in an sich bekannter Weise nach Maßgabe der niederfrequenteren Taktsignale in niederbitratige Datenströme umgesetzt. Alternativ kann das Taktsignal, mit dem die hochbitratigen Datenströme einer Eingangsgruppe synchronisiert sind, in an sich bekannter Weise mittels einer Taktrückgewinnungsschaltung aus einem der hochbitratigen Datenströme gewonnen werden. Jedenfalls wird ein mit den niederbitratigen Datenströmen korreliertes Taktsignal an die eingangsgruppenindividuelle Synchronisiereinrichtung SYNEIN1 abgegeben.

Einem weiteren eingangsgruppenindividuellen Eingang SE wird ein Synchronisationssignal zugeführt, das einen bestimmten Zeitpunkt in den der zugehörigen Gruppe zugeführten hochbitratigen Datenströmen angibt. Dieser Zeitpunkt ist insbesondere durch den Beginn eines in dem hochbitratigen Datenstrom übertragenen Datenblocks gegeben. Bei dem Datenblock möge es sich insbesondere um eine im Zuge von virtuellen Verbindungen nach einem asynchronen Übertragungsverfahren übertragene ATM(Asynchronous Transfer Mode)-Zelle handeln. Dieses Synchronisationssignal wird einem weiteren eingangsgruppenindividuellen Demultiplexer DMUXS zugeführt, dem außerdem von der Teilereinrichtung die niederfrequenten Taktsignale Zugeführt werden. In dem weiteren Demultiplexer wird aus dem mit den hochbitratigen Datenströmen korrelierten Synchronisationssignal nach Maßgabe der niederfrequenten Taktsignale ein mit den niederbitratigen Datenströmen korreliertes Synchronisationssignal gebildet, das der eingangsgruppenindividuellen Synchronisationseinrichtung zugeführt wird. Alternativ zu dem mit den hochbitratigen Datenströmen korrelierten Synchronisationssignal, das dem Baustein zugeführt wird, kann eine eingangsgruppenindividuelle Schaltung vorgesehen sein, die das Synchronisationssignal aus einem der eingangsgruppenzugehörigen hochbitratigen Datenströme in an sich bekannter Weise gewinnt. Jedenfalls wird ein mit den niederbitratigen Datenströmen korreliertes Synchronisationssignal an die eingangsgruppenzugehörige Synchronisiereinrichtung SYNEIN1 abgegeben.

Beim Anmeldungsgegenstand ist die Gesamtheit der Datenausgange in eine Mehrzahl von Ausgangsgruppen AP1...APr aufgeteilt; eine Ausgangsgruppe umfaßt eine Mehrzahl von Datenausgängen, die jeweils auf dasselbe Taktsignal mit im wesentlichen derselben Phasenlage synchronisierte hochbitratige Datenströme führen.

Eine Ausgangsgruppe bildet also gewissermaßen eine in sich synchrone Taktinsel.

Die Synchronisation der niederbitratigen Datenströme erfolgt gesondert für jede Ausgangsgruppe.

Das zentrale Taktsignal MC wird neben der Teilereinrichtung DIVw einer ausgangsgruppenindividuellen Teilereinrichtung DIVa zugeführt, wo es in an sich bekannter Weise in eine Mehrzahl niederfrequenter Taktsignale Tna1..Tnam umgesetzt wird. Ein aus dieser Teilereinrichtung abgeleitetes niederfrequentes Taktsignal, dessen Frequenz dem internen Taktsignal gleicht, wird einer ausgangsgruppenindividuellen Synchronisationseinrichtung SYNAUS1..SYNAUSr zugeführt.

Die von der internen Schaltung in Richtung zu den Datenausgängen abgegebenen niederbitratigen Datenströme werden in der ausgangsgruppenindividuellen Synchronisiereinrichtung mit dem aus dem zentralen Taktsignal abgeleiteten und der Synchronisiereinrichtung zugeführten niederfrequenten Taktsignal in an sich bekannter Weise synchronisiert. Eine Mehrzahl von synchronisierten niederbitratigen Datenströmen werden jeweils einer einem Datenausgang DA zugeordneten Multiplexer MUX zugeführt. In dem Multiplexer werden die niederbitratigen Datenströme nach Maßgabe der von der Teilereinrichtung DIVa abgegebenen niederfrequenten Taktsignale zu einem hochbitratigen Datenstrom DSha zusammengeführt. Die Mehrzahl der niederbitratigen Datenströme ist dabei so bemessen, daß die Gesamtheit der einzelnen Bitfolgeraten der Mehrzahl der niederbitratigen Datenströme die Bitfolgerate des hochbitratigen Datenstroms nicht überschreitet.

Zu den hochbitratigen Datenströmen einer Ausgangsgruppe kann über einen Taktausgang TA ein mit dem zentralen Takt identisches Taktsignal mitgeführt sein. Die ausgangsgruppenindividuelle Synchronisationseinrichtung gibt ein mit den niederbitratigen Datenströmen korreliertes Synchronisationssignal SYNCna an einen zusätzlichen Multiplexer MUXS ab. In dem Multiplexer MUXS wird dieses Synchronisationssignal nach Maßgabe der von der Teilereinrichtung DIVa zugeführten niederfrequenten Taktsignale in ein Synchronisationssignal SYNCha umgesetzt, das mit den ausgangsgruppenzugehörigen hochbitratigen Datenströmen korreliert ist. Dieses Synchronisationssignal kann mit den ausgangsgruppenzugehörigen hochbitratigen Datenströmen mitgeführt sein.

Die Schaltungsanordnung nach Fig. 1 möge durch eine monolithisch integrierte Schaltung gegeben sein, die in BICMOS(Bipolar Complementary Metal Oxide Silicium)-Technologie realisiert ist. In der
BICMOS-Technologie lassen sich bekanntlich ECL(Emitter Coupled Logic)-Strukturen und CMOS(Complemtary Metal Oxide Silicium)-Strukturen gemeinsam auf einem einzigen Substrat realisieren. Während die ECL-Technologie einen hohen Grenzwert für die maximal zulässige Datenrate bei einer allerdings nicht unerheblichen Verlustleistung aufweist, bringt demgegenüber die CMOS-Technologie einen niedrigeren Grenzwert für die maximal zulässige Datenrate bei einer erheblich reduzierten Verlustleistung mit sich. Bei der vorliegenden Schaltungsanordnung möge der Wechsel zwischen der ECL-Technologie und der CMOS-Technologie so bald erfolgen, als es die zu verarbeitende Bitfolgerate zuläßt. Im Ausführungsbeispiel, bei dem die hochbitratigen Datenströme eine Bitfolgerate von 800 Mbit/s aufweisen und die Verarbeitung von Daten in der internen Schaltung mit 100 Mbit/s erfolgt, möge der Technologiewechsel bei einer Datenrate von 400 Mbit/s gegeben sein. Bei dieser Auslegung haben in dem Ausführungsbeispiel die ECL-Schaltungsteile einen Anteil von etwa 1 % an der Gesamtschaltung, wobei diese Schaltungsteile etwa 1/3 der Verlustleistung der gesamten Schaltungsanordnung verursachen. Im Ausführungsbeispiel erfolgt also der Wechsel zwischen den Schaltungstechnologien eingangsseitig im Bereich der Demultiplexer und ausgangsseitig im Bereich der Multiplexer statt.

Es sei noch darauf hingewiesen, daß der zentrale Takt MC durch die Umsetzung in der Teilereinrichtung DIVw eine Verzögerung erfährt, während die hochbitratigen Datenströme mit dem zentralen Takt abgetaktet werden. Die dadurch entstehenden Laufzeitunterschiede können Layout-technisch, d.h. durch entsprechende Gestaltung beim Entwurf des Bausteins, ausgeglichen werden. Dadurch, daß die Synchronisation zwischen der internen Schaltung und den Datenausgängen im Bereich der niederbitratigen Datenströme erfolgt, werden deutlich niedrigere Anforderungen an die Koinzidenz der einzelnen Signale gestellt, als wenn die Synchronisation im Bereich der hochbitratigen Datenströme erfolgen würde. Schließlich sei erwähnt, daß bei der Schaltungsanordnung gemäß dem Ausführungsbeispiel sämtliche Datenübernahmen synchron erfolgen.

## Patentansprüche

1. Baustein mit einer integrierten Schaltung, die Daten mit einer gegebenen internen Bitfolgerate zu verarbeiten vermag, wobei
- der Baustein eine Vielzahl von Dateneingängen (DE1..DEx) aufweist, denen jeweils ein serieller hochbitratiger Datenstrom mit einer gegenüber der internen Bitfolgerate erhöhten Bitfolgerate zuführbar ist,
- für jeden Dateneingang ein Demultiplexer (DMUX1..DMUXx) vorgesehen ist, dessen Teilerverhältnis derart bemessen ist, daß er eine dem Teilerverhältnis entsprechende Mehrzahl von niederbitratigen Datenströmen mit jeweils niedrigerer oder allenfalls gleich hoher Bitfolgerate wie die interne Bitfolgerate abgibt,
- die niederbitratigen Datenströme auf die interne Bitfolgerate synchronisierbar sind,
**dadurch gekennzeichnet,**
- daß die Dateneingänge zu einer Mehrzahl von jeweils auf ein Taktsignal mit im wesentlichen derselben Phasenlage synchronisierten Eingangsgruppen (EP1..EPs) zusammengefaßt sind, und
- daß die Synchronisierung der niederbitratige Datenströme mit der internen Bitfolgerate für jede Eingangsgruppe gesondert durchführbar ist.

2. Baustein nach Anspruch 1,
**dadurch gekennzeichnet,**
daß einem weiteren, einer Gruppe zugeordneten Eingang (TE) ein Taktsignal zugeführt ist, mit dem die Datenströme der Gruppe synchronisiert sind.

3. Baustein nach Anspruch 1 oder 2,
**dadurch gekennzeichnet,**
daß einem zusätzlichen, einer Eingangsgruppe zugeordneten Eingang (SE) ein Synchronisationssignal (SYNCh) zugeführt ist, das jeweils den Beginn eines in den zugehörigen Datenströmen übertragenen Datenblocks, insbesondere einer ATM (Asynchronous Transfer Mode)-Zelle, angibt.

4. Baustein nach Anspruch 2 oder 3,
**dadurch gekennzeichnet,**
daß einer Eingangsgruppe ein mit dem zugehörigen Taktsignal beaufschlagter Teiler (DIVe) zugeordnet ist, aus dem eine Mehrzahl niederfrequenterer Taktsignale (Tn1..Tnm) mit untereinander unterschiedlicher Taktfrequenz ableitbar ist.

5. Baustein nach Anspruch 4,
**dadurch gekennzeichnet,**
daß die niederfrequenteren Taktsignale dem Demultiplexer zuführbar sind, wobei die niederbitratigen Datenströme nach Maßgabe der zugeführten niederfrequenten Taktsignale aus dem Demultiplexer abgebbar sind.

6. Baustein nach Anspruch 4,
**dadurch gekennzeichnet,**
daß einem weiteren, einer Eingangsgruppe zugeordneten Demultiplexer (DMUXS), der eingangsseitig mit dem Synchronisationssignal (SYNCh) beaufschlagt ist, die niederfrequenteren Taktsignale zugeführt sind, wobei ein mit den niederbitratigeren Datenströme korreliertes Synchronisationssignal (SYNCn) aus dem weiteren Demultiplexer abgebbar ist.

7. Baustein nach einem der vorstehenden Ansprüche,
**dadurch gekennzeichnet,**
daß die Eingänge (DE1..DEx, TE, SE) durch Anschlußklemmen des Bausteins gegeben sind und wenigstens einer von den Demultiplexern (DMUX1..DMUXx) oder dem weiteren Demultiplexer (DMUXS) oder der Teilereinrichtung (DIVe) in unmittelbarer räumlicher Nähe zu den entsprechenden Eingängen angeordnet ist/sind.

8. Baustein nach einem der vorstehenden Ansprüche,
**dadurch gekennzeichnet,**
daß die integrierte Schaltung in BICMOS(BIpolar Complementary Metall Oxid Silicium) - Technologie monolithisch aufgebaut ist.

9. Baustein nach Anspruch 8,
**dadurch gekennzeichnet,**
daß diejenigen Schaltungsteile der integrierten Schaltung, die mit einer niedrigeren oder allenfalls einer gleich hohen Bitfolgerate wie die maximale, durch die CMOS - Technologie gegebene Bitfolgerate betrieben sind, in CMOS - Technologie ausgeführt sind.

10. Verfahren zur Durchschaltung von Daten mit einer hohen Bitfolgerate über einen Baustein, der eine Daten mit einer niedrigen Bitfolgerate verarbeitende interne Schaltung aufweist, demzufolge
- eine Vielzahl von Dateneingängen zu einer Mehrzahl von jeweils mehrere Dateneingängen aufweisende Eingangsgruppen zusammengefaßt werden,
- den Dateneingängen zugeführte hochbitratige Datenströme jeweils in eine Mehrzahl von niederbitratigen Datenströmen mit einer jeweiligen niedrigeren oder allenfalls gleich hohen Bitfolgerate wie der internen Bitfolgerate gedemultiplext werden,
- die interne Schaltung mit einem aus einem externen zugeführten zentralen Taktsignal (MC) abgeleiteten internen Taktsignal (Ti) betrieben wird,
- die niederbitratigen Datenströme für jede Eingangsgruppe gesondert mit dem internen Taktsignal synchronisiert werden,
- die von der internen Schaltung abgegebenen niederbitratigen Datenströme zu einer Mehrzahl von jeweils mehrere Datenausgänge umfassende Ausgangsgruppen zusammengefaßt werden,
- die von der internen Schaltung abgegebenen niederbitratigen Datenströme für jede Ausgangsgruppe gesondert mit dem zentralen Taktsignal synchronisiert werden,
- eine Mehrzahl von niederbitratigen Datenströmen zu einem hochbitratigen Datenstrom zusammengeführt und weitergeleitet wird.
